# EUROPEAN PATENT APPLICATION

(11) **EP 4 683 161 A1**
(43) Date of publication of application: **21.01.2026**
(21) Application number: 24869940.7
(22) Date of filing: 01.07.2024
(51) Int. Cl.: H02J 7/00

(54) **ENERGY STORAGE APPARATUS AND ENERGY STORAGE SYSTEM**

(30) Priority: 27.09.2023 CN 202322643016 U
(71) Applicant: Contemporary Amperex Technology Co., Limited, Ningde, Fujian 352100 (CN)
(72) Inventor: ZHANG, Mingliang, Ningde, Fujian 352100 (CN); SU, Haibin, Ningde, Fujian 352100 (CN); PENG, Haoran, Ningde, Fujian 352100 (CN)
(74) Representative: Ziebig Hengelhaupt Intellectual Property Attorneys Patentanwaltskanzlei PartGmbB
(86) International application number: PCT/CN2024/102944
(87) International publication number: WO 2025/066382

(57) **Abstract**

The present application provides an energy storage apparatus and an energy storage system, where the energy storage apparatus includes a box, at least two mutually insulated input-output terminals, and at least two mutually independent high-voltage circuits; and each high-voltage circuit includes at least one battery, a plurality of batteries are accommodated in the box, and the high-voltage circuits are electrically connected to the input-output terminals in a one-to-one correspondence. The energy storage apparatus provided by the present application helps to reduce the power demand of the energy storage apparatus on related charging mechanisms, thereby lowering the cost of the related charging mechanisms, and can also meet more diverse and higher power demands, allowing the energy storage apparatus to more flexibly adapt to various power requirements, thus helping to reduce the usage costs of the energy storage apparatus.

## Description

### CROSS-REFERENCE TO RELATED APPLICATIONS

The present application claims priority to Chinese Patent Application No. 202322643016.1, filed on September 27, 2023, entitled "ENERGY STORAGE APPARATUS AND ENERGY STORAGE SYSTEM," the entire content of which is incorporated herein by reference.

### TECHNICAL FIELD

The present application relates to the field of energy storage technology, and in particular, to an energy storage apparatus and an energy storage system.

### BACKGROUND

With the rapid development of technology, electrical energy has become an indispensable energy source in people's production and daily life. To improve the reliability of electrical energy supply and ensure the normal operation of production and daily life, energy storage apparatuses are required. As apparatuses for storing electrical energy, energy storage apparatuses store electrical energy therein through charging or release stored electrical energy to electrical apparatus through discharging. Energy storage apparatuses are widely used in fields such as industrial power supply, household power supply, temporary power supply, mobile power supply, wind power generation, solar power generation, and energy storage power stations.

In the development of energy storage apparatuses, in addition to improving their performance, reducing the usage costs of energy storage apparatuses is also a critical issue that cannot be overlooked. Therefore, reducing the usage costs of energy storage apparatuses is a technical problem that requires continuous improvement in energy storage technology.

### SUMMARY

The present application provides an energy storage apparatus and an energy storage system capable of reducing the usage costs of the energy storage apparatus.

According to a first aspect, an energy storage apparatus provided by an embodiment of the present application includes a box, at least two mutually insulated input-output terminals, and at least two mutually independent high-voltage circuits; and each high-voltage circuit includes at least one battery, a plurality of batteries are accommodated in the box, and the high-voltage circuits are electrically connected to the input-output terminals in a one-to-one correspondence.

According to the energy storage apparatus provided by the embodiment of the present application, the energy storage apparatus with at least two input-output terminals and at least two mutually independent high-voltage circuits are arranged, and the high-voltage circuits are electrically connected to the input-output terminals in a one-to-one correspondence. In this way, a plurality of charging mechanisms each can be used to charge the corresponding high-voltage circuit during the charging process of the energy storage apparatus. This is conducive to reducing the power demand of the energy storage apparatus on related charging mechanisms, thereby lowering the cost of the related charging mechanisms. Additionally, by connecting at least two or all high-voltage circuits of one energy storage apparatus in series or parallel, or by connecting at least one high-voltage circuit of one energy storage apparatus in parallel with all high-voltage circuits of another energy storage apparatus, the apparatus can meet more diverse and higher power demands, allowing the energy storage apparatus to flexibly adapt to various power requirements, thus helping to reduce the usage costs of the energy storage apparatus.

In some embodiments, each input-output terminal includes a busbar assembly, and each busbar assembly is electrically connected to the corresponding high-voltage circuit. This facilitates the electrical connection between the batteries of the high-voltage circuit and the busbar assembly and enables the series or parallel connection of the corresponding batteries.

In some embodiments, each busbar assembly includes a positive busbar plate and a negative busbar plate that are mutually insulated, the positive busbar plate is electrically connected to the positive electrode of the high-voltage circuit, and the negative busbar plate is electrically connected to the negative electrode of the high-voltage circuit; and the box includes an insulating separator, and the positive busbar plate and the negative busbar plate are respectively disposed on two sides of the insulating separator. This arrangement, with the positive busbar plate and the negative busbar plate insulated from each other, reduces the risk of a short circuit within the high-voltage circuit of the energy storage apparatus due to the proximity of the positive busbar plate and the negative busbar plate.

In some embodiments, along a thickness direction of the positive busbar plate, two adjacent positive busbar plates are offset; and/or, along a thickness direction of the negative busbar plate, two adjacent negative busbar plates are offset. This helps to increase the electrical clearance and creepage distance between two adjacent positive busbar plates or negative busbar plates, reducing the risk of a short circuit between the corresponding adjacent positive busbar plates or adjacent negative busbar plates, and facilitating compliance with the safety requirements of the energy storage apparatus.

In some embodiments, along the thickness direction of the positive busbar plate, the adjacent positive busbar plate and negative busbar plate are offset. This arrangement helps to further increase the electrical clearance and creepage distance between the adjacent positive busbar plate and negative busbar plate, further improving the safety performance of the energy storage apparatus.

In some embodiments, the energy storage apparatus further includes a plurality of insulating support members, and the insulating support members are interposed between the busbar assembly and the box to space the busbar assembly from the box. This arrangement helps to improve the insulation performance between the busbar assembly and the box, thus further helping to improve the reliability of the energy storage apparatus.

In some embodiments, the insulating support members cooperating with two offset positive busbar plates have different dimensions along the thickness direction of the positive busbar plate, so that two adjacent positive busbar plates are offset along the thickness direction of the positive busbar plate. By configuring the insulating support members with different dimensions along the thickness direction of the positive busbar plate, the offset arrangement of two adjacent positive busbar plates is achieved, increasing the electrical clearance between adjacent positive busbar plates through a simple structure, which helps to simplify the structure of the energy storage apparatus.

In some embodiments, the insulating support members cooperating with two offset negative busbar plates have different dimensions along the thickness direction of the negative busbar plate, so that two adjacent negative busbar plates are offset along the thickness direction of the negative busbar plate. This simple structure achieves an increase in the electrical clearance between adjacent negative busbar plates, helping to simplify the structure of the energy storage apparatus.

In some embodiments, the insulating support members cooperating with the offset positive busbar plate and negative busbar plate have different dimensions along the thickness direction of the positive busbar plate, so that the adjacent positive busbar plate and negative busbar plate are offset along the thickness direction of the positive busbar plate. This simple structure achieves an increase in the electrical clearance between the adjacent positive busbar plate and negative busbar plate, helping to simplify the structure of the energy storage apparatus.

In some embodiments, the insulating support members are columnar, and the energy storage apparatus further includes an insulating sheet, the insulating sheet being interposed between the box and the insulating support members. This helps to further improve the insulation performance between the busbar assembly and the box. Additionally, the insulating sheet can increase the friction between the insulating support members and the box, reducing the risk of loosening the connection between the box and the insulating support members, thereby helping to improve the connection reliability between the busbar assembly and the box.

In some embodiments, each high-voltage circuit includes at least one battery cluster, and each battery cluster includes a plurality of mutually electrically connected batteries. The energy storage apparatus further includes a plurality of main control elements, and the main control elements are electrically connected to the battery clusters in a one-to-one correspondence. This arrangement facilitates the normal operation of the battery clusters, and the independent control of a plurality of battery clusters in one high-voltage circuit facilitates timely adjustment of the operating parameters of the corresponding battery clusters, improving the reliability of each battery cluster's operation, thus further helping to improve the reliability of the energy storage apparatus.

In some embodiments, the energy storage apparatus further includes at least two mutually independent master control elements, the main control element electrically connected to the battery cluster of one high-voltage circuit is electrically connected to one master control element, and the master control elements correspond to the high-voltage circuits in a one-to-one manner. This helps to maintain the independence of the operation of each high-voltage circuit and improve the operational reliability of the energy storage apparatus.

In some embodiments, the energy storage apparatus further includes a power distribution element, and the power distribution element is electrically connected to at least two master control elements. Sharing one power distribution element by a plurality of high-voltage circuits helps to simplify the structure of the energy storage apparatus, improving the structural compactness of the energy storage apparatus.

In some embodiments, the energy storage apparatus further includes a fire protection element, and the fire protection element is electrically connected to at least two master control elements. At least two high-voltage circuits share one fire protection element, which, while meeting relevant fire protection requirements, helps to further simplify the structure of the energy storage apparatus, improving the structural compactness of the energy storage apparatus.

In some embodiments, the input-output terminals, the power distribution element, the master control elements, and the fire protection element are disposed on the same side of the box. This arrangement helps to simplify the electrical connection lines of the related structures, further improving the structural compactness of the energy storage apparatus.

In some embodiments, the input-output terminals are disposed below the power distribution element, the master control elements, and the fire protection element in the direction of gravity. This arrangement facilitates the electrical connection of the input-output terminals with the relevant charging mechanisms or electrical apparatuses and simplifies the related connection harnesses.

In some embodiments, the energy storage system further includes at least two heat exchange systems, each heat exchange system includes a heat exchange member, the heat exchange systems correspond to the high-voltage circuits in a one-to-one manner, and the heat exchange member of one heat exchange system is arranged to perform heat exchange with the batteries of the corresponding high-voltage circuit. This helps to improve the heat exchange efficiency between the heat exchange member and the batteries while reducing energy consumption.

In some embodiments, the heat exchange member includes a first flow channel, the heat exchange members correspond to the batteries in a one-to-one manner, and the first flow channels of the heat exchange members corresponding to at least some of the batteries in a same high-voltage circuit are connected in parallel. This helps to improve the heat exchange efficiency between the heat exchange member and the batteries, enhancing the temperature consistency of the batteries, and further facilitating the improvement of the reliability of the energy storage apparatus.

According to a second aspect, an energy storage system provided by an embodiment of the present application includes the energy storage apparatus provided by any of the above embodiments.

The energy storage system provided by the embodiment of the present application, by adopting the energy storage apparatus provided by any of the above embodiments, has the same technical effects, which will not be repeated here.

In some embodiments, the energy storage system further includes at least two charging mechanisms, and the charging mechanisms are electrically connected to the input-output terminals in a one-to-one correspondence to charge the energy storage apparatus. The one-to-one correspondence between the charging mechanisms and the input-output terminals facilitates charging of the respective high-voltage circuits and reduces the power demand on the charging mechanisms, thereby lowering charging costs.

In some embodiments, the box has a through-hole at the bottom in the direction of gravity, and the wiring harness of the charging mechanism passes through the through-hole. This helps to simplify the connection harness between the charging mechanism and the input-output terminals, enabling the concealment of the wiring harness of the charging mechanism, and reducing the risk of safety hazards due to exposed wiring harnesses of the charging mechanism.

### BRIEF DESCRIPTION OF DRAWINGS

To more clearly illustrate the technical solutions of the embodiments of the present application, the drawings required for use in the embodiments of the present application will be briefly introduced below. Obviously, the drawings described below are only some embodiments of the present application. For those of ordinary skill in the art, other drawings can be obtained based on these drawings without creative effort.
FIG. 1 is a schematic structural diagram of an energy storage system provided by an embodiment of the present application;
FIG. 2 is a schematic structural diagram of a battery cluster in an energy storage apparatus provided by an embodiment of the present application;
FIG. 3 is a schematic structural diagram of a battery cell in an energy storage apparatus provided by an embodiment of the present application;
FIG. 4 is a schematic structural diagram of an energy storage apparatus provided by an embodiment of the present application;
FIG. 5 is a partial enlarged view at A in FIG. 4;
FIG. 6 is a front view of an energy storage apparatus provided by an embodiment of the present application;
FIG. 7 is a right view of an energy storage apparatus provided by an embodiment of the present application;
FIG. 8 is a schematic structural cross-sectional view along B-B in FIG. 7;
FIG. 9 is a partial enlarged view at C in FIG. 8; and
FIG. 10 is a schematic structural diagram of a battery and a heat exchange member in an energy storage apparatus provided by an embodiment of the present application.

In the drawings, the drawings are not drawn to actual scale.

Description of reference signs of drawings:
1. energy storage system;
10. energy storage apparatus;
11. box; 11a. mounting surface; 111. first accommodation cavity; 112. second accommodation cavity; 113. insulating separator; 114. insulating sheet;
12. input-output terminal; 121. busbar assembly; 121a. positive busbar plate; 121b. negative busbar plate;
13. main control element; 14. master control element; 15. power distribution element; 16. fire protection element; 17. insulating support member; 18. heat exchange system; 181. heat exchange member;
20. battery cluster; 21. battery;
30. battery cell; 31. shell; 31a. accommodation cavity; 32. electrode assembly; 321. electrode body; 322. tab; 33. electrode terminal;
40. charging mechanism;
X. thickness direction of positive busbar plate.

### DESCRIPTION OF EMBODIMENTS

The embodiments of the present application will be described in further detail below with reference to the drawings and embodiments. The detailed description and drawings of the following embodiments are used to exemplarily illustrate the principles of the present application but cannot be used to limit the scope of the present application, that is, the present application is not limited to the described embodiments.

In the description of the present application, it should be noted that, unless otherwise specified, "a plurality of" means two or more. The terms "upper," "lower," "left," "right," "inner," "outer," and the like indicating orientation or positional relationships are only for the convenience of describing the present application and simplifying the description, and do not indicate or imply that the referred apparatus or element must have a specific orientation, be constructed, and operated in a specific orientation, and thus cannot be understood as limiting the present application. In addition, the terms "first," "second," and the like are used for descriptive purposes only and cannot be understood as indicating or implying relative importance. "Vertical" is not strictly vertical but within the allowable range of error. "Parallel" is not strictly parallel but within the allowable range of error.

Reference to "embodiment" in the present application means that a specific feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described in the present application can be combined with other embodiments.

In the description of the present application, it should also be noted that, unless otherwise expressly specified and limited, the terms "mounted," "connected," and "connection" should be understood broadly, for example, as a fixed connection, a detachable connection, or an integral connection; it can be a direct connection or an indirect connection through an intermediate medium. For those of ordinary skill in the art, the specific meaning of the above terms in the present application can be understood depending on the specific circumstances.

The term "a plurality of" appearing in the present application refers to two or more (including two).

In the present application, a battery cell may include a lithium-ion secondary battery cell, a lithium-ion primary battery cell, a lithium-sulfur battery cell, a sodium-lithium-ion battery cell, a sodium-ion battery cell, or a magnesium-ion battery cell, and the embodiments of the present application are not limited thereto. The battery cell may be cylindrical, flat, rectangular, or in other shapes, and the embodiments of the present application are not limited thereto.

The battery mentioned in the embodiments of the present application may include one or more battery cells to provide a single physical module with higher voltage and capacity. When there are a plurality of battery cells, the plurality of battery cells are connected in series, parallel, or a combination thereof through busbar components.

In some embodiments, the battery may be a battery module; and when there are a plurality of battery cells, the plurality of battery cells are arranged and fixed to form a battery module.

In some embodiments, the battery may be a battery pack, the battery pack includes a box and battery cells, and the battery cells or battery modules are accommodated in the box.

In some embodiments, the energy storage apparatus includes an energy storage container, an energy storage cabinet, and the like.

A battery cell generally includes an electrode assembly. The electrode assembly includes a positive electrode, a negative electrode, and a separator. During the charging and discharging process of the battery cell, active ions (for example, lithium ions) intercalate and deintercalate back and forth between the positive electrode and the negative electrode. The separator is disposed between the positive electrode and the negative electrode, preventing a short circuit between the positive and negative electrodes while allowing active ions to pass through.

Optionally, the electrode assembly is a wound structure. The positive electrode sheet and the negative electrode sheet are wound into a wound structure.

Optionally, the electrode assembly is a laminated structure.

Optionally, the shape of the electrode assembly may be cylindrical, flat, or prismatic, and the like.

In the related art, during the use of energy storage apparatuses, the power demand of the related electrical device on the energy storage apparatus is increasing. As the power of the energy storage apparatus increases, the power demand of the energy storage apparatus on the related charging mechanisms also increases. High-power charging mechanisms are in low demand and supply, and the cost of high-power charging mechanisms is high, resulting in high charging costs for high-power energy storage apparatuses, significantly increasing the usage costs of the energy storage apparatuses.

In view of this, the embodiments of the present application propose a new technical solution, and the technical solution described in the embodiments of the present application is applicable to energy storage apparatuses and electrical apparatus using energy storage apparatuses.

The energy storage system may be an energy storage power station, a wind power generation system, a solar power generation system, a mobile power system, or a temporary power supply system. An energy storage power station can store electrical energy during low electricity demand periods and provide electrical energy to related users or electrical devices during peak demand periods. The wind energy collected by the wind power generation units of a wind power generation system is converted into electrical energy and stored by the energy storage apparatus. A solar power generation system can convert solar energy into electrical energy, which is then stored by the energy storage apparatus and supplied to users as needed. A mobile power system can supply power to related electrical devices in regions where the grid power system cannot reach, such as remote mountainous regions or isolated wilderness regions. A temporary power supply system can supply power to users in a case that the power supply is insufficient. The energy storage system provided by the embodiments of the present application can be any power system that requires the use of an energy storage apparatus.

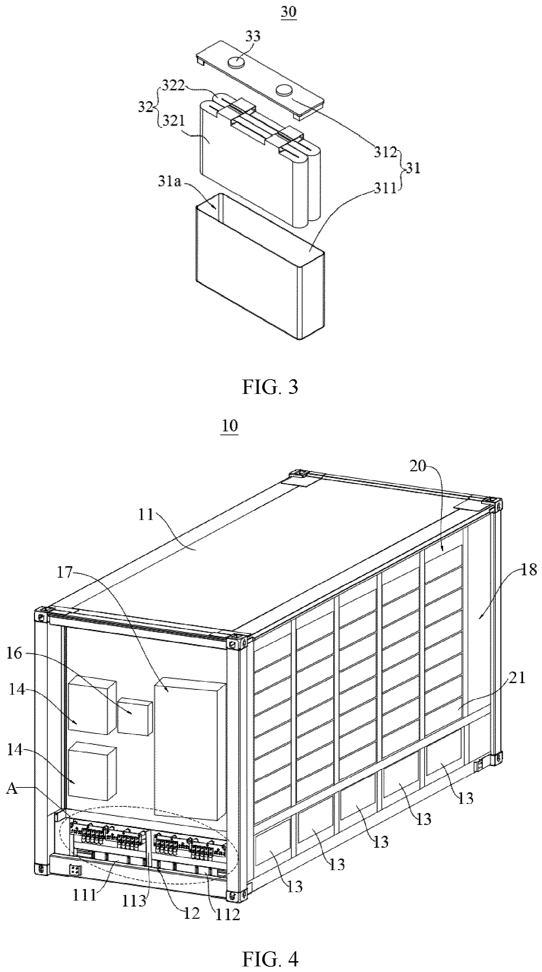

As shown in FIG. 3, the battery cell 30 described in the embodiments of the present application includes an electrode assembly 32 and a shell 31, the shell 31 having an accommodation cavity 31a, and the electrode assembly 32 being accommodated in the accommodation cavity 31a.

The shell 31 includes a casing 311 and an end cap 312. During assembly of the battery cell 30, the electrode assembly 32 can be placed in the accommodation cavity 31a, the end cap 312 can be closed onto the casing 311, and then an electrolyte can be injected into the accommodation cavity 31a through an electrolyte injection port on the end cap 312.

In some embodiments, the shell 31 may also be used to accommodate an electrolyte, such as an electrolyte. The shell 31 may have various structural forms.

The shell 31 may have various shapes, such as a cylinder, a rectangular parallelepiped, and the like. The shape of the shell 31 may be determined based on the specific shape of the electrode assembly 32. For example, if the electrode assembly 32 is a cylindrical structure, the shell 31 may be selected as a cylindrical structure. If the electrode assembly 32 is a rectangular parallelepiped structure, the shell 31 may be selected as a rectangular parallelepiped structure. In FIG. 4, illustratively, both the shell and the electrode assembly 32 are rectangular parallelepiped structures.

The material of the shell 31 may be various, such as copper, iron, aluminum, stainless steel, aluminum alloy, and the like, and the embodiments of the present application are not particularly limited thereto.

The electrode assembly 32 accommodated in the shell 31 may be one or more. In FIG. 4, there are two electrode assemblies 32 accommodated in the shell 31.

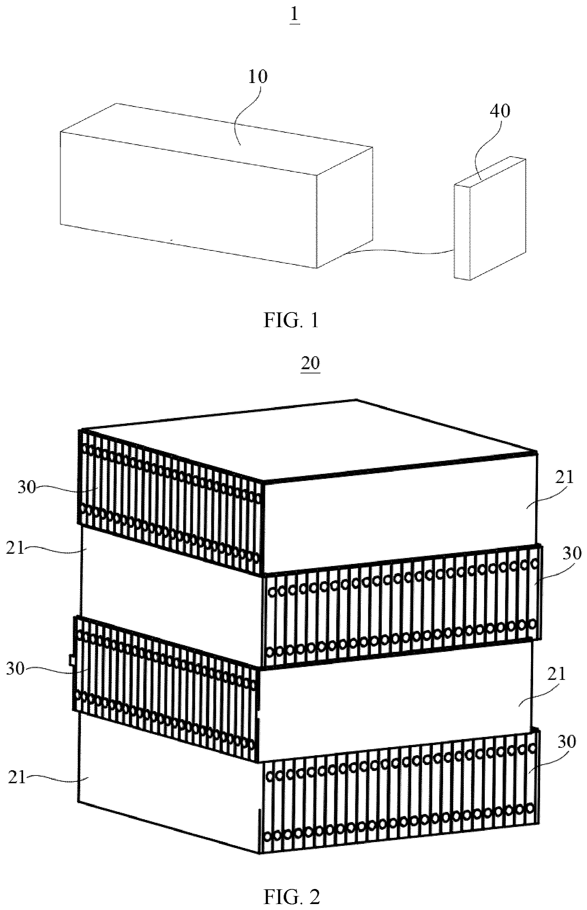

As shown in FIGs. 1 to 4, in some embodiments, the energy storage apparatus 10 provided by an embodiment of the present application includes a box 11, at least two mutually insulated input-output terminals 12, and at least two mutually independent high-voltage circuits. Each high-voltage circuit includes at least one battery 21, a plurality of batteries 21 are accommodated in the box 11, and the high-voltage circuits are electrically connected to the input-output terminals 12 in a one-to-one correspondence.

The high-voltage circuit is a circuit composed of the main components of the energy storage apparatus 10 used for storing and releasing electrical energy. The energy storage apparatus 10 stores electrical energy in the battery 21 through the high-voltage circuit and releases the electrical energy stored in the battery 21 through the high-voltage circuit.

When at least two high-voltage circuits are mutually independent, any high-voltage circuit can independently charge or discharge without affecting the charging or discharging of other high-voltage circuits. In other words, it is possible to charge only at least one of the at least two high-voltage circuits, or, at the input-output terminals 12 of the energy storage apparatus 10, a plurality of high-voltage circuits can be connected in parallel or series through external wires to achieve increased power. Certainly, it is also possible to charge other high-voltage circuits while discharging at least one high-voltage circuit.

When any two high-voltage circuits are mutually independent, there may be no high-voltage electrical connection between any two high-voltage circuits, but this does not mean there is no electrical connection at all. In fact, two high-voltage circuits may be respectively electrically connected to control elements to transmit electrical signals, so that two mutually independent high-voltage circuits may have an indirect low-voltage electrical connection.

When a high-voltage circuit includes at least one battery 21, the high-voltage circuit may include one or more batteries 21. Optionally, the battery 21 may be a battery cell 30, a battery module, or a battery pack, where the battery module may include a plurality of battery cells 30 connected in series or parallel, and the battery pack may include a plurality of battery cells 30 connected in series or parallel and a battery pack box for accommodating the battery cells 30. The battery pack box includes an upper box body and a lower box body, and the upper box body and the lower box body are fastened to form a space for accommodating the battery cells.

Optionally, the high-voltage circuit may also include a fuse device, a current collection element, a voltage collection element, and the like connected in series to timely obtain the operating status of the high-voltage circuit and control the fusing of the high-voltage circuit.

The high-voltage circuit and the input-output terminal 12 allow a charging mechanism 40 for charging the energy storage apparatus 10 to be electrically connected to the input-output terminal 12 to achieve charging of the energy storage apparatus 10, and related electrical apparatus can also be electrically connected to the input-output terminal 12 to supply the electrical energy of the energy storage apparatus 10 to the electrical apparatus.

Optionally, the input-output terminal 12 may include separate input terminals and output terminals, the input terminals may be used for electrical connection with the charging mechanism 40, the output terminals may be used for electrical connection with the electrical apparatus, and the input terminals and output terminals are respectively electrically connected to the high-voltage circuit.

The input-output terminals 12 are electrically connected to the high-voltage circuits in a one-to-one correspondence, so that one input-output terminal 12 is electrically connected to only one high-voltage circuit, and one high-voltage circuit is electrically connected to only one input-output terminal 12, to achieve independent charging or discharging of each high-voltage circuit.

During use of the energy storage apparatus 10, at least two high-voltage circuits can be connected in series or parallel outside the energy storage apparatus 10 through connection lines, or at least one high-voltage circuit of one energy storage apparatus 10 can be connected in series or parallel with all high-voltage circuits of another energy storage apparatus 10 to meet the user's power demands for the energy storage apparatus 10.

According to the energy storage apparatus 10 provided by the embodiment of the present application, the energy storage apparatus 10 with at least two input-output terminals 12 and at least two mutually independent high-voltage circuits are arranged, and the high-voltage circuits are electrically connected to the input-output terminals 12 in a one-to-one correspondence. In this way, a plurality of charging mechanisms 40 each can be used to charge the corresponding high-voltage circuit during the charging process of the energy storage apparatus 10. This is conducive to reducing the power demand of the energy storage apparatus 10 on related charging mechanisms 40, thereby lowering the cost of the related charging mechanisms 40. Additionally, by connecting at least two or all high-voltage circuits of one energy storage apparatus 10 in series or parallel, or by connecting at least one high-voltage circuit of one energy storage apparatus 10 in parallel with all high-voltage circuits of another energy storage apparatus 10, the apparatus can meet more diverse and higher power demands, allowing the energy storage apparatus 10 to flexibly adapt to various power requirements, thus helping to reduce the usage costs of the energy storage apparatus 10.

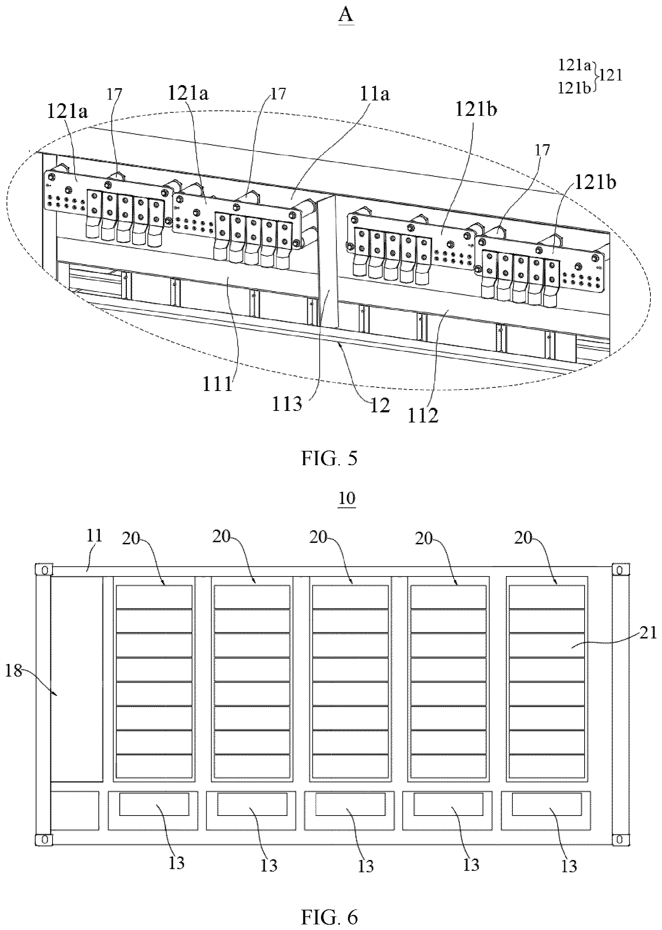

As shown in FIGs. 4 and 6, in some embodiments, each input-output terminal 12 includes a busbar assembly 121, and each busbar assembly 121 is electrically connected to the corresponding high-voltage circuit.

When the busbar assembly 121 is electrically connected to the corresponding high-voltage circuit, the busbar assembly 121 can be electrically connected to the battery 21 of the high-voltage circuit that is electrically connected to the corresponding input-output terminal 12. Illustratively, a plurality of batteries 21 can be connected in series to form a battery cluster 20, and a plurality of battery clusters 20 can be respectively electrically connected to the busbar assembly 121 to achieve parallel connection of a plurality of battery clusters 20.

The busbar assembly 121 can be arranged in separate parts and respectively electrically connected to the positive electrode and negative electrode of the high-voltage circuit, or the busbar assembly 121 can be arranged as an integral unit including two mutually insulated parts, with the two parts of the busbar assembly 121 respectively electrically connected to the positive electrode or negative electrode of the high-voltage circuit.

The input-output terminal 12 may also include input terminals or output terminals, and the input terminals and output terminals are respectively electrically connected to the busbar assembly 121 to achieve the purpose of electrically connecting the input-output terminal 12 to the charging mechanism 40 and the electrical apparatus.

The input-output terminal 12 including the busbar assembly 121 facilitates the electrical connection between the battery 21 of the high-voltage circuit and the busbar assembly 121 and enables the series or parallel connection of the corresponding batteries 21.

As shown in FIGs. 4 and 5, in some embodiments, each busbar assembly 121 includes a positive busbar plate 121a and a negative busbar plate 121b that are mutually insulated, the positive busbar plate 121a is electrically connected to the positive electrode of the high-voltage circuit, and the negative busbar plate 121b is electrically connected to the negative electrode of the high-voltage circuit. The box 11 includes an insulating separator 113, and the positive busbar plate 121a and the negative busbar plate 121b are respectively disposed on two sides of the insulating separator 113.

The busbar assembly 121 includes the positive busbar plate 121a and the negative busbar plate 121b, where the positive busbar plate 121a is electrically connected to the positive electrode of the high-voltage circuit, so the positive electrodes of a plurality of batteries 21 connected in series or parallel can be separately connected to the positive busbar plate 121a, and the negative busbar plate 121b is electrically connected to the negative electrode of the high-voltage circuit, so the negative electrodes of a plurality of batteries 21 connected in series or parallel can be separately connected to the negative busbar plate 121b.

The positive busbar plate 121a and the negative busbar plate 121b may have the same structure, or the positive busbar plate 121a and the negative busbar plate 121b may be arranged to have different structures, which can be selected according to actual needs.

The insulating separator 113 separates the positive busbar plate 121a and the negative busbar plate 121b to achieve insulation isolation between the positive busbar plate 121a and the negative busbar plate 121b. Optionally, the spaces where the positive busbar plate 121a and the negative busbar plate 121b are located may be in communication with each other or isolated from each other.

Illustratively, the box 11 may be arranged to include a first accommodation cavity 111 and a second accommodation cavity 112, and the insulating separator 113 achieves mutual isolation between the first accommodation cavity 111 and the second accommodation cavity 112.

The energy storage apparatus 10 includes at least two positive busbar plates 121a and at least two negative busbar plates 121b, and at least two positive busbar plates 121a are accommodated in the first accommodation cavity 111. All positive busbar plates 121a corresponding to a plurality of high-voltage circuits of the energy storage apparatus 10 may be accommodated in the first accommodation cavity 111, or a portion of the plurality of positive busbar plates 121a of the energy storage apparatus 10 may be accommodated in the first accommodation cavity 111. Similarly, all negative busbar plates 121b corresponding to a plurality of high-voltage circuits of the energy storage apparatus 10 may be accommodated in the second accommodation cavity 112, or a portion of the plurality of negative busbar plates 121b of the energy storage apparatus 10 can be accommodated in the second accommodation cavity 112.

Optionally, the box 11 may also include other chambers that are respectively insulated and isolated from the first accommodation cavity 111 and the second accommodation cavity 112 to accommodate at least two positive busbar plates 121a or at least two negative busbar plates 121b.

The first accommodation cavity 111 and the second accommodation cavity 112 of the box 11 are insulated and separated by the insulating separator 113, so the positive busbar plate 121a in the first accommodation cavity 111 and the negative busbar plate 121b in the second accommodation cavity 112 are insulated and isolated from each other. This can reduce the risk of a short circuit within the high-voltage circuit of the energy storage apparatus 10 due to electrical connection between the positive busbar plate 121a in the first accommodation cavity 111 and the negative busbar plate 121b in the second accommodation cavity 112.

Therefore, configuring the box 11 with the insulating separator 113 to achieve insulation isolation between the positive busbar plate 121a and the negative busbar plate 121b through the insulating separator 113 helps to reduce the risk of an internal short circuit in the energy storage apparatus 10, thus further helping to improve the reliability of the energy storage apparatus 10.

As shown in FIGs. 4, 5, 8, and 9, in some embodiments, along the thickness direction X of the positive busbar plate, two adjacent positive busbar plates 121a are offset.

The thickness direction X of the positive busbar plate may be the direction of the smallest dimension of the positive busbar plate 121a. In other words, the thickness direction X of the positive busbar plate may be the normal direction of the larger surface area of the positive busbar plate 121a.

In other words, along the direction perpendicular to the thickness direction X of the positive busbar plate, the projections of two adjacent positive busbar plates 121a are offset, ensuring sufficient electrical clearance and creepage distance between them, reducing the risk of the two corresponding positive busbar plates 121a being too close, and facilitating compliance with the safety requirements of the energy storage apparatus 10.

In some embodiments, along the thickness direction of the negative busbar plate 121b, two adjacent negative busbar plates 121b are offset.

In a case that the negative busbar plate 121b is mounted in the same direction as the positive busbar plate 121a, the thickness direction of the negative busbar plate 121b may be the same as the thickness direction X of the positive busbar plate.

In other words, along the direction perpendicular to the thickness direction of the negative busbar plate 121b, the orthographic projections of two adjacent negative busbar plates 121b are offset, ensuring sufficient electrical clearance and creepage distance between them, reducing the risk of the two corresponding negative busbar plates 121b being too close, and facilitating compliance with the safety requirements of the energy storage apparatus 10.

In some embodiments, along the thickness direction X of the positive busbar plate, the adjacent positive busbar plate 121a and negative busbar plate 121b are offset.

This helps to increase the electrical clearance and creepage distance between the adjacent positive busbar plate 121a and negative busbar plate 121b, further improving the safety performance of the energy storage apparatus 10.

As shown in FIGs. 4, 5, 8, and 9, in some embodiments, the energy storage apparatus 10 further includes a plurality of insulating support members 17, and the insulating support members 17 are interposed between the busbar assembly 121 and the box 11 to space the busbar assembly 121 from the box 11.

The insulating support members 17 are made of insulating material and a connector may pass through the box 11, the insulating support members 17, and the busbar assembly 121 to achieve the interposition of the insulating support members 17 between the busbar assembly 121 and the box 11.

The insulating support members 17 may be columnar or other shapes, and the insulating support members 17 can achieve insulation between the box 11 and the busbar assembly 121 and provide certain support for the busbar assembly 121. The dimensions of the insulating support members 17 may be adjusted as needed to adjust the position of the busbar assembly 121 relative to the box 11.

Therefore, configuring the insulating support members 17, with the insulating support members 17 interposed between the busbar assembly 121 and the box 11, helps to improve the insulation performance between the busbar assembly 121 and the box 11, thus further helping to improve the reliability of the energy storage apparatus 10.

In some embodiments, the insulating support members 17 cooperating with two offset positive busbar plates 121a have different dimensions along the thickness direction X of the positive busbar plate, so that two adjacent positive busbar plates 121a are offset along the thickness direction X of the positive busbar plate.

By configuring the adjacent insulating support members 17 with different dimensions along the thickness direction of the positive busbar plate 121a, the offset arrangement of two adjacent positive busbar plates 121a is achieved, increasing the electrical clearance and creepage distance between the positive busbar plates 121a through a simple structure, helping to simplify the structure of the energy storage apparatus 10.

In some embodiments, the insulating support members 17 cooperating with two offset negative busbar plates 121b have different dimensions along the thickness direction of the negative busbar plate 121b, so that two adjacent negative busbar plates 121b are offset along the thickness direction of the negative busbar plate 121b.

In this way, the insulating support members 17 have different dimensions along the thickness direction, increasing the electrical clearance and creepage distance between two adjacent negative busbar plates 121b, thus further helping to simplify the structure of the energy storage apparatus 10.

In some embodiments, the insulating support members 17 cooperating with the offset positive busbar plate 121a and negative busbar plate 121b have different dimensions along the thickness direction X of the positive busbar plate, so that the adjacent positive busbar plate 121a and negative busbar plate 121b are offset along the thickness direction X of the positive busbar plate.

In this way, the insulating support members 17 have different dimensions along the thickness direction X of the positive busbar plate, increasing the electrical clearance and creepage distance between the adjacent positive busbar plate 121a and negative busbar plate 121b, further helping to simplify the structure of the energy storage apparatus 10.

In some embodiments, the insulating support members 17 are columnar, and the energy storage apparatus 10 further includes an insulating sheet 114, the insulating sheet 114 being interposed between the box 11 and the insulating support members 17.

The insulating support members 17 may be hollow columnar to facilitate the passage of a connector through the insulating support members 17 to achieve a secure connection between the busbar assembly 121 and the box 11. The insulating sheet 114 may be insulating paper or the like, and placing the insulating sheet 114 between the insulating support members 17 and the box 11 helps to further improve the insulation performance between the busbar assembly 121 and the box 11. Additionally, the insulating sheet 114 can increase the friction between the insulating support members 17 and the box 11, reducing the risk of loosening the connection between the box 11 and the insulating support members 17, thereby helping to improve the connection reliability between the busbar assembly 121 and the box 11. As shown in FIG. 6, in some embodiments, each high-voltage circuit includes at least one battery cluster 20, and each battery cluster 20 includes a plurality of mutually electrically connected batteries 21. The energy storage apparatus 10 further includes a plurality of main control elements 13, and the main control elements 13 are electrically connected to the battery clusters 20 in a one-to-one correspondence.

The battery cluster 20 includes mutually electrically connected batteries 21, so the batteries 21 may be battery 21 packs, battery cells 30, or battery 21 modules, and the batteries 21 of the battery cluster 20 may be connected in series or parallel. When a high-voltage circuit includes a plurality of battery clusters 20, the plurality of battery clusters 20 of one high-voltage circuit may be connected in series or parallel.

Illustratively, one high-voltage circuit may be arranged to include a plurality of battery clusters 20 connected in parallel, one battery cluster 20 includes a plurality of battery 21 modules connected in series, and one battery 21 module includes a plurality of battery cells 30 connected in series.

The main control element 13 may include components such as a fuse or a relay, and the main control element 13 is electrically connected to the battery 21, so the main control element 13 can be electrically connected to the battery 21 through wires or the like to obtain operating parameters such as voltage, current, and temperature of the battery 21 during operation, and can transmit low-voltage electrical signals to the battery cell 30 to control the battery 21 to disconnect at appropriate times, improving the safety performance of the battery 21.

The main control element 13 may also include a high-voltage harness and be electrically connected to the corresponding battery cluster 20 to achieve series or parallel connection of a plurality of battery clusters 20 through the high-voltage harness, thereby forming a high-voltage circuit.

The main control elements 13 correspond to the battery clusters 20 in a one-to-one manner, one set of main control elements 13 control the operating parameters such as voltage, current, and temperature of one battery cluster 20, and the main control element 13 feeds back control signals to the battery cluster 20, facilitating the normal operation of the battery cluster 20. Additionally, the independent control of a plurality of battery clusters 20 in one high-voltage circuit ensures that, in the case of an open circuit in one battery cluster 20, the other battery clusters 20 can operate normally, and the high-voltage circuit will not fail due to an abnormality in one battery cluster 20, further helping to improve the reliability of the energy storage apparatus 10.

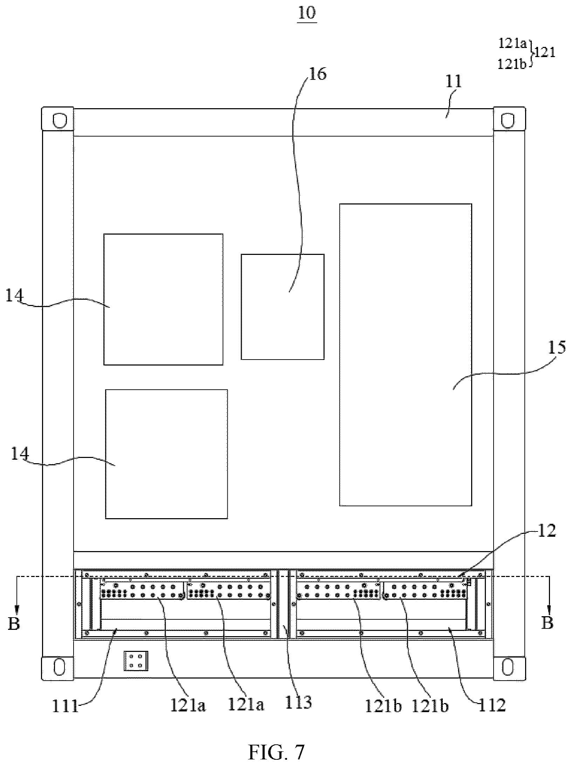

As shown in FIGs. 4 and 7, in some embodiments, the energy storage apparatus 10 further includes at least two mutually independent master control elements 14, the main control element 13 electrically connected to the battery cluster 20 of one high-voltage circuit is electrically connected to one master control element 14, and the master control elements 14 correspond to the high-voltage circuits in a one-to-one manner.

The master control element 14 may include control components, a control circuit board, and the like, and the master control element 14 can determine whether the battery 21 is operating abnormally based on information such as voltage, current, or temperature transmitted from the main control element 13, and transmit related control signals to the main control element 13, so that the main control element 13 controls the battery 21 to adjust its operating state in time, facilitating the normal operation of the battery 21.

The master control elements 14 correspond to the high-voltage circuits in a one-to-one manner, so the number of master control elements 14 is equal to the number of high-voltage circuits, and the main control element 13 electrically connected to the battery clusters 20 in one high-voltage circuit is electrically connected to only one master control element 14, so that one master control element 14 controls one high-voltage circuit, that is, the master control elements 14 corresponding to different high-voltage circuits are arranged separately, helping to maintain the independence of the operation of each high-voltage circuit and improve the operational reliability of the energy storage apparatus 10.

As shown in FIGs. 4 and 7, in some embodiments, the energy storage apparatus 10 further includes a power distribution element 15, and the power distribution element 15 is electrically connected to at least two of the master control elements 14.

The power distribution element 15 may include a fuse, a relay, and the like. The power distribution element 15 can convert the voltage or current of the high-voltage circuit of the energy storage apparatus 10 into appropriate voltage and current and distribute it to the corresponding electrical components.

The power distribution element 15 is electrically connected to at least two master control elements 14, enabling a plurality of high-voltage circuits to share one power distribution element 15 while maintaining the independence of the operation of each high-voltage circuit. This helps to simplify the structure of the energy storage apparatus 10, improving the structural compactness of the energy storage apparatus 10.

Still referring to FIGs. 4 and 7, in some embodiments, the energy storage apparatus 10 further includes a fire protection element 16, and the fire protection element 16 is electrically connected to at least two master control elements 14.

The fire protection element 16 may include a smoke sensor, an alarm apparatus, an extinguishing apparatus, and the like, and the fire protection element 16 can detect the occurrence of a fire in time and transmit related signals to the master control element 14 and related extinguishing apparatuses, so that the master control element 14 and the extinguishing apparatus take measures to suppress or mitigate the fire.

The fire protection element 16 is electrically connected to at least two master control elements 14, so at least two high-voltage circuits share one fire protection element, which, while meeting relevant fire protection requirements, helps to further simplify the structure of the energy storage apparatus 10, improving the structural compactness of the energy storage apparatus 10.

Still referring to FIGs. 4 and 7, in some embodiments, the input-output terminals 12, the power distribution element 15, the master control elements 14, and the fire protection element 16 are disposed on the same side of the box 11.

Optionally, the input-output terminals 12, the power distribution element 15, the fire protection element 16, and the master control elements 14 corresponding to different high-voltage circuits may be accommodated in different accommodation cavities of the box 11 and located on the same side of the box 11. This arrangement helps to simplify the electrical connection lines of the related structures, further improving the structural compactness of the energy storage apparatus 10.

Still referring to FIGs. 4 and 7, in some embodiments, the input-output terminals 12 are disposed below the power distribution element 15, the master control elements 14, and the fire protection element 16 in the direction of gravity.

The input-output terminals 12 can be used for electrical connection with the charging mechanism 40 or electrical apparatus to achieve charging of the energy storage apparatus 10. Arranging the input-output terminals 12 below the power distribution element 15, the master control elements 14, and the fire protection element 16 in the direction of gravity facilitates the electrical connection of the input-output terminals 12 with the related charging mechanism 40 or electrical apparatus and simplification of the related connection harnesses.

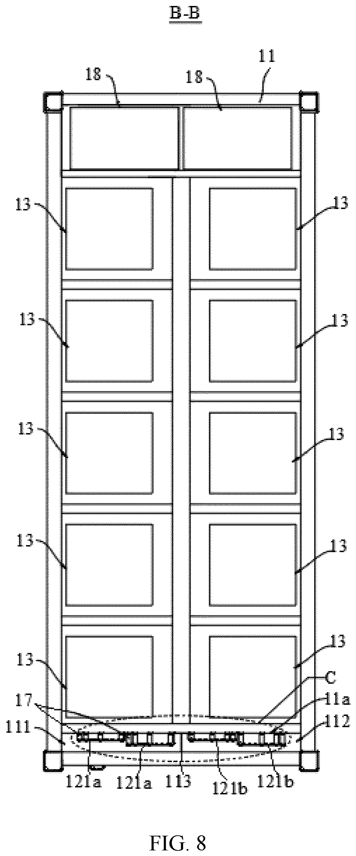

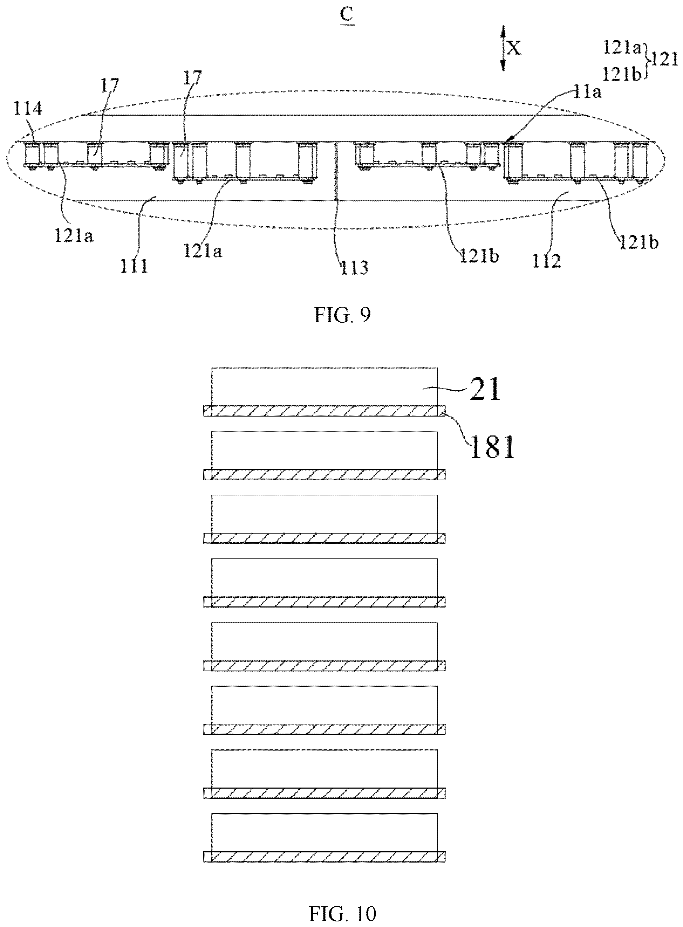

As shown in FIGs. 8 and 10, in some embodiments, the energy storage apparatus 10 further includes at least two heat exchange systems 18, each heat exchange system 18 includes a heat exchange member 181, the heat exchange systems 18 correspond to the high-voltage circuits in a one-to-one manner, and the heat exchange member 181 of one heat exchange system 18 is configured to perform heat exchange with the batteries 21 of the corresponding high-voltage circuit.

The heat exchange system 18 includes the heat exchange member 181, and the heat exchange member 181 performs heat exchange with the batteries 21 of the corresponding high-voltage circuit, so the heat exchange member 181 can cool or heat the batteries 21. Illustratively, the heat exchange member 181 may include a water-cooling plate, and the heat exchange system 18 may also include a water-cooling unit. The low-temperature fluid flowing out of the water-cooling unit flows to the water-cooling plate, exchanges heat with the battery 21 in the water-cooling plate, carries away the heat from the battery 21, and then flows back to the water-cooling unit. After being cooled by the water-cooling unit, it flows back to the heat exchange member 181, and the cycle repeats.

The heat exchange systems 18 correspond to the high-voltage circuits in a one-to-one manner, so the number of heat exchange systems 18 is equal to the number of high-voltage circuits, and the heat exchange member 181 in one heat exchange system 18 performs heat exchange only with the batteries 21 in one high-voltage circuit. This allows each heat exchange system 18 to independently perform heat exchange with the batteries 21 in the corresponding high-voltage circuit. Thus, when some high-voltage circuits are operating while other high-voltage circuits are not, the corresponding heat exchange systems 18 can operate or not operate accordingly, helping to improve the heat exchange efficiency between the heat exchange member 181 and the batteries 21 while reducing energy consumption.

In some embodiments, the heat exchange member 181 includes a first flow channel, the heat exchange members 181 correspond to the batteries 21 in a one-to-one manner, and the first flow channels of the heat exchange members 181 corresponding to at least some of the batteries 21 in the same high-voltage circuit are connected in parallel.

Optionally, the first flow channels of the heat exchange members 181 corresponding to all batteries 21 in one high-voltage circuit may be connected in parallel.

Illustratively, the fluid flowing out of the water-cooling unit may be divided into a plurality of branches corresponding to the number of battery clusters 20 in the high-voltage circuit, and each sub-branch may further be divided into a plurality of branches corresponding to the number of batteries 21 in the battery cluster 20, so that the first flow channels of the heat exchange members 181 corresponding to the batteries 21 in the high-voltage circuit are connected in parallel.

It can be understood that arranging the first flow channels of the heat exchange members 181 corresponding to at least some of the batteries 21 in the same high-voltage circuit to be connected in parallel ensures that the temperatures of the fluids in the parallel first flow channels are relatively consistent, resulting in comparable cooling or heating effects on the batteries 21 during heat exchange of the batteries 21, helping to improve the heat exchange efficiency between the heat exchange member 181 and the batteries 21, and improve the temperature consistency of the batteries 21, thus further helping to improve the reliability of the energy storage apparatus 10.

The energy storage system 1 provided by an embodiment of the present application includes the energy storage apparatus 10 provided by any of the above embodiments.

The energy storage system 1 provided by the embodiment of the present application, by adopting the energy storage apparatus 10 provided by any of the above embodiments, has the same technical effects, which will not be repeated here.

In some embodiments, the energy storage system 1 further includes at least two charging mechanisms 40, and the charging mechanisms 40 are electrically connected to the input-output terminals 12 in a one-to-one correspondence to charge the energy storage apparatus 10.

The charging mechanisms 40 are electrically connected to the input-output terminals 12 in a one-to-one correspondence, so one charging mechanism 40 charges one high-voltage circuit. In a case that the total power of the energy storage apparatus 10 is fixed, the more high-voltage circuits there are inside the energy storage apparatus 10, the lower the average power of each high-voltage circuit, and the lower the power demand on the charging mechanism 40.

Therefore, at least two high-voltage circuits are arranged for the energy storage apparatus 10 of the energy storage system 1 provided by the embodiment of the present application, and the charging mechanisms 40 are electrically connected to the input-output terminals 12 in a one-to-one correspondence, helping to charge the respective high-voltage circuits and reduce the power demand on the charging mechanisms 40, thereby lowering charging costs.

In some embodiments, the box 11 has a through-hole at the bottom in the direction of gravity, and the wiring harness of the charging mechanism 40 passes through the through-hole.

This arrangement helps to simplify the connection harness between the charging mechanism 40 and the input-output terminals 12, and the wiring harness of the charging mechanism 40 passes through the through-hole at the bottom of the box 11, enabling the concealment of the wiring harness of the charging mechanism 40, and reducing the risk of safety hazards due to exposed wiring harnesses of the charging mechanism 40.

In some embodiments, the energy storage apparatus 10 provided by the present application includes a box 11, at least two mutually insulated input-output terminals 12, at least two mutually independent high-voltage circuits, main control elements 13, at least two mutually independent master control elements 14, a power distribution element 15, a fire protection element 16, insulating support members 17, an insulating sheet 114, and at least two heat exchange systems 18. Each high-voltage circuit includes at least one battery 21, a plurality of batteries 21 are accommodated in the box 11, and the high-voltage circuits are electrically connected to the input-output terminals 12 in a one-to-one correspondence. Each input-output terminal 12 includes a busbar assembly 121, and each busbar assembly 121 includes a positive busbar plate 121a and a negative busbar plate 121b that are mutually insulated, the positive busbar plate 121a is electrically connected to the positive electrode of the high-voltage circuit, and the negative busbar plate 121b is electrically connected to the negative electrode of the high-voltage circuit. The box 11 includes an insulating separator 113, and the positive busbar plate 121a and the negative busbar plate 121b are respectively disposed on two sides of the insulating separator 113. Along the thickness direction X of the positive busbar plate, two adjacent positive busbar plates 121a are offset, and along the thickness direction of the negative busbar plate 121b, two adjacent negative busbar plates 121b are offset, so that two adjacent negative busbar plates 121b are offset. Along the thickness direction X of the positive busbar plate, the adjacent positive busbar plate 121a and negative busbar plate 121b are offset, and the adjacent positive busbar plate 121a and negative busbar plate 121b are offset. The high-voltage circuit includes at least one battery cluster 20, the battery cluster 20 includes a plurality of mutually electrically connected batteries 21, and the main control elements 13 are electrically connected to the battery clusters 20 in a one-to-one correspondence. The main control element 13 electrically connected to the battery cluster 20 of one high-voltage circuit is electrically connected to one master control element 14, the master control elements 14 correspond to the high-voltage circuits in a one-to-one manner, the power distribution element 15 is electrically connected to at least two master control elements 14, the input-output terminals 12, the power distribution element 15, the master control elements 14, and the fire protection element 16 are disposed on the same side of the box 11, and the input-output terminals 12 are disposed below the power distribution element 15, the master control elements 14, and the fire protection element 16 in the direction of gravity. The insulating support members 17 are columnar and interposed between the busbar assembly 121 and the box 11, and the insulating sheet 114 is interposed between the box 11 and the insulating support members 17 to space the busbar assembly 121 from the box 11. The insulating support members 17 cooperating with two offset positive busbar plates 121a have different dimensions along the thickness direction X of the positive busbar plate, so that two adjacent positive busbar plates 121a are offset, the insulating support members 17 cooperating with two offset negative busbar plates 121b have different dimensions along the thickness direction of the negative busbar plate 121b, so that two adjacent negative busbar plates 121b are offset, and the insulating support members 17 cooperating with the offset positive busbar plate 121a and negative busbar plate 121b have different dimensions along the thickness direction X of the positive busbar plate, so that the adjacent positive busbar plate 121a and negative busbar plate 121b are offset. The heat exchange system 18 includes a heat exchange member 181, the heat exchange systems 18 correspond to the high-voltage circuits in a one-to-one manner, and the heat exchange member 181 of one heat exchange system 18 is configured to abut against the batteries 21 of the corresponding high-voltage circuit to perform heat exchange with the batteries. The heat exchange member 181 includes a first flow channel, the heat exchange members 181 correspond to the batteries 21 in a one-to-one manner, and the first flow channels of the heat exchange members 181 corresponding to at least some of the batteries 21 in the same high-voltage circuit are connected in parallel.

According to the energy storage apparatus 10 provided by the embodiment of the present application, the energy storage apparatus 10 with at least two input-output terminals 12 and at least two mutually independent high-voltage circuits are arranged, and the high-voltage circuits are electrically connected to the input-output terminals 12 in a one-to-one correspondence. In this way, a plurality of charging mechanisms 40 each can be used to charge the corresponding high-voltage circuit during the charging process of the energy storage apparatus 10. This is conducive to reducing the power demand of the energy storage apparatus 10 on related charging mechanisms 40, thereby lowering the cost of the related charging mechanisms 40. Additionally, by connecting at least two or all high-voltage circuits of one energy storage apparatus 10 in series or parallel, or by connecting at least one high-voltage circuit of one energy storage apparatus 10 in parallel with all high-voltage circuits of another energy storage apparatus 10, the apparatus can meet more diverse and higher power demands, allowing the energy storage apparatus 10 to flexibly adapt to various power requirements, thus helping to reduce the usage costs of the energy storage apparatus 10.

Although the present application has been described with reference to preferred embodiments, various improvements can be made thereto, and components therein can be replaced with equivalents without departing from the scope of the present application. In particular, as long as there is no structural conflict, the technical features mentioned in the various embodiments can be combined in any manner. The present application is not limited to the specific embodiments disclosed herein but includes all technical solutions falling within the scope of the claims.

## Claims

1. An energy storage apparatus comprising:
a box;
at least two mutually insulated input-output terminals;
at least two mutually independent high-voltage circuits, each high-voltage circuit comprising at least one battery, and a plurality of the batteries being accommodated in the box, wherein the high-voltage circuits are electrically connected to the input-output terminals in a one-to-one correspondence.

2. The energy storage apparatus according to claim 1, wherein each input-output terminal comprises a busbar assembly, each busbar assembly being electrically connected to the corresponding high-voltage circuit.

3. The energy storage apparatus according to claim 2, wherein each busbar assembly comprises a positive busbar plate and a negative busbar plate that are mutually insulated, the positive busbar plate being electrically connected to a positive electrode of the high-voltage circuit, and the negative busbar plate being electrically connected to a negative electrode of the high-voltage circuit; and
the box comprises an insulating separator, wherein the positive busbar plate and the negative busbar plate are respectively disposed on two sides of the insulating separator.

4. The energy storage apparatus according to claim 3, wherein, along a thickness direction of the positive busbar plate, two adjacent positive busbar plates are offset; and/or, along a thickness direction of the negative busbar plate, two adjacent negative busbar plates are offset.

5. The energy storage apparatus according to claim 3 or 4, wherein, along the thickness direction of the positive busbar plate, adjacent positive busbar plate and negative busbar plate are offset.

6. The energy storage apparatus according to any one of claims 3 to 5, wherein the energy storage apparatus further comprises a plurality of insulating support members, the insulating support members being interposed between the corresponding busbar assembly and the box to space the busbar assembly from the box.

7. The energy storage apparatus according to claim 6, wherein the insulating support members cooperating with two offset positive busbar plates have different dimensions along the thickness direction of the positive busbar plate, so that two adjacent positive busbar plates are offset along the thickness direction of the positive busbar plate; and/or,
the insulating support members cooperating with two offset negative busbar plates have different dimensions along the thickness direction of the negative busbar plate, so that two adjacent negative busbar plates are offset along the direction of the negative busbar plate; and/or,
the insulating support members cooperating with offset positive busbar plate and negative busbar plate have different dimensions along the thickness direction of the positive busbar plate, so that the adjacent positive busbar plate and negative busbar plate are offset along the thickness direction of the positive busbar plate.

8. The energy storage apparatus according to claim 6 or 7, wherein the insulating support members are columnar, and the energy storage apparatus further comprises an insulating sheet, the insulating sheet being interposed between the box and the insulating support members.

9. The energy storage apparatus according to any one of claims 1 to 8, wherein each high-voltage circuit comprises at least one battery cluster, each battery cluster comprising a plurality of mutually electrically connected batteries; and
the energy storage apparatus further comprises a plurality of main control elements, the main control elements being electrically connected to the battery clusters in a one-to-one correspondence.

10. The energy storage apparatus according to claim 9, wherein the energy storage apparatus further comprises at least two mutually independent master control elements, the main control element electrically connected to the battery cluster of one high-voltage circuit being electrically connected to one master control element, wherein the master control elements correspond to the high-voltage circuits in a one-to-one manner.

11. The energy storage apparatus according to claim 10, wherein the energy storage apparatus further comprises a power distribution element, the power distribution element being electrically connected to at least two of the master control elements.

12. The energy storage apparatus according to claim 11, wherein the energy storage apparatus further comprises a fire protection element, the fire protection element being electrically connected to at least two of the master control elements.

13. The energy storage apparatus according to claim 12, wherein the input-output terminals, the power distribution element, the master control elements, and the fire protection element are disposed on a same side of the box.

14. The energy storage apparatus according to claim 13, wherein the input-output terminals are disposed below the power distribution element, the master control elements, and the fire protection element in a direction of gravity.

15. The energy storage apparatus according to any one of claims 1 to 14, wherein the energy storage apparatus further comprises at least two heat exchange systems, each heat exchange system comprising a heat exchange member, and the heat exchange systems corresponding to the high-voltage circuits in a one-to-one manner, wherein the heat exchange member of one heat exchange system is configured to perform heat exchange with the batteries of the corresponding high-voltage circuit.

16. The energy storage apparatus according to claim 15, wherein the heat exchange member comprises a first flow channel, the heat exchange members correspond to the batteries in a one-to-one manner, and the first flow channels of the heat exchange members corresponding to at least some of the batteries in a same high-voltage circuit are connected in parallel.

17. An energy storage system comprising the energy storage apparatus according to any one of claims 1 to 16.

18. The energy storage system according to claim 17, wherein the energy storage system further comprises at least two charging mechanisms, the charging mechanisms being electrically connected to the input-output terminals in a one-to-one correspondence to charge the energy storage apparatus.

19. The energy storage system according to claim 18, wherein the box has a through-hole at a bottom in a direction of gravity, and a wiring harness of the charging mechanism passes through the through-hole.
